# EUROPÄISCHE PATENTSCHRIFT

(11) **EP 4 331 091 B1**
(45) Veröffentlichungstag und Bekanntmachung des Hinweises auf die Patenterteilung: **30.09.2026**
(21) Anmeldenummer: 22720298.3
(22) Anmeldetag: 12.04.2022
(51) Int. Cl.: H02K 5/15, H02K 9/06, H02K 7/102, H02K 5/04

(54) **ELEKTROMOTOR MIT EINER ROTORWELLE, EINEM STATORGEHÄUSE UND EINEM LAGERFLANSCH**
ELECTRIC MOTOR HAVING A ROTOR SHAFT, A STATOR HOUSING AND A BEARING FLANGE
MOTEUR ÉLECTRIQUE DOTÉ D'UN ARBRE DE ROTOR, D'UN BOÎTIER DE STATOR ET D'UNE BRIDE DE PALIER

(30) Priorität: 28.04.2021 CN 202110468411; 01.07.2021 DE 102021003379
(43) Veröffentlichungstag der Anmeldung: 06.03.2024
(73) Patentinhaber: SEW-EURODRIVE GmbH & Co. KG, 76646 Bruchsal (DE)
(72) Erfinder: JINCHANG, Li, Tianjin (CN)
(86) Internationale Anmeldenummer: PCT/EP2022/025143
(87) Internationale Veröffentlichungsnummer: WO 2022/228715

(56) Entgegenhaltungen:
- DE-A1- 4 225 158
- DE-B- 1 136 545
- US-B1- 6 376 951

## Beschreibung

Die Erfindung betrifft einen Elektromotor mit einer Rotorwelle, einem Statorgehäuse und einem Lagerflansch.

Es ist allgemein bekannt, dass ein Elektromotor eine zu einem Statorgehäuse drehbar gelagerte Rotorwelle aufweist.

Aus der DE 10 2006 054 807 A1 ist ein Elektromotor mit Schnellverschlusslüftereinheit bekannt.

Aus der DE 629546 A ist eine Klemmenplatte für elektrische Kabelabschlussgeräte bekannt.

Aus der CH 186526 A ist ein elektrischer Handstaubsauger bekannt.

Aus der CH 366235 A ist ein Transportbehälter bekannt.

**Aus der** DE 42 25 158 A1 **ist als nächstliegender Stand der Technik ein Elektromaschinensystem bekannt.**

**Aus der** US 6 376 951 B1 **ist eine Abdeckung für Marine-Generatoren bekannt.**

**Aus der** DE 11 36 545 B **ist eine elektromagnetisch lüftbare Federdruckbremse bei einem Elektromotor bekannt.**

Aus der DE 10 2004 049 716 B4 ist eine Dosiervorrichtung für Schüttgüter mit Antrieb bekannt.

Aus der DE 10 2019 002 748 A1 ist ein Elektromotor, aufweisend eine Rotorwelle und einen Winkelsensor, bekannt.

Der Erfindung liegt daher die Aufgabe zugrunde, einen Elektromotor weiterzubilden, wobei eine verbesserte Entwärmung einfach herstellbar ist.

Erfindungsgemäß wird die Aufgabe bei dem Elektromotor nach den in Anspruch 1 angegebenen Merkmalen gelöst.

Wichtige Merkmale der Erfindung bei dem Elektromotor mit einer Rotorwelle, einem Statorgehäuse und einem Lagerflansch,
wobei die Rotorwelle über ein im Lagerflansch aufgenommenes Lager drehbar gelagert ist,
wobei ein Lüfterrad mit der Rotorwelle drehfest verbunden ist.
wobei der Lagerflansch mit dem Statorgehäuse verbunden ist mittels Befestigungsmitteln, insbesondere mittels Schraubteilen, verbunden ist,
wobei eine das Lüfterrad umgebende Lüfterhaube mittels zumindest einem Schnellspannverschluss mit dem Lagerflansch verbunden ist, indem ein Halteelement mit dem Lagerflansch verbunden ist, insbesondere mittels axial gerichteter Schrauben an einen Stirnflächenbereich des Lagerflansches angedrückt ist, und ein Bügel des Schnellspannverschlusses in einem Hakenbereich des Halteelements eingelegt und/oder eingespannt ist.

Von Vorteil ist dabei, dass eine schnelle Herstellung ermöglicht ist, indem die Lüfterhaube mit Schnellspannverschlüssen befestigbar ist. Dabei ist eine verbesserte Entwärmung erreicht, da die Lüfterhaube derart an den Erhebungen befestigt ist, dass der vom Lüfterrad geförderte der Kühlluftstrom an den Erhebungen insbesondere in Umfangsrichtung beidseitig vorbeiströmt und wegen dieser Umströmung eine besonders effiziente Abgabe der Wärme aus dem Lagerflansch an den Kühlluftstrom ermöglicht ist. Die Wärme stammt dabei nicht nur vom Statorgehäuse oder Lager, sondern auch von einer Bremse, die von der Lüfterhaube umgeben ist, insbesondere von einem Bremsflächenteil der Bremse, das eine Reibwärme aufnehmende Bremsfläche aufweist. Das Bremsflächenteil und der Lagerflansch sind dabei vorzugsweise aus einem Stahl gefertigt. Das Statorgehäuse mit Kühlrippen ist dabei ebenfalls aus einem Metall gefertigt.

Durch die Festlegung des Schnellspannverschlusses am Lagerflansch, insbesondere auf dessen von dem Lüfterrad abgewandter Seite, ist die Lüfterhaube relativ zum Lagerflansch wohldefiniert positioniert.

Bei einer vorteilhaften Ausgestaltung weist der Lagerflansch zumindest eine radial gerichtete Erhebung und/oder einen radial gerichteten Fortsatz auf,
insbesondere woran der Stirnflächenbereich ausgebildet ist, insbesondere an welchem eine Befestigungslasche des Halteelements anliegt. Von Vorteil ist dabei, dass die Erhebung radial hervorragt und somit einerseits als Befestigung für das Halteelement dient und andererseits die Lüfterhaube trägt sowie Wärme an den Kühlluftstrom abgibt.

Bei einer vorteilhaften Ausgestaltung strömt der vom Lüfterrad geförderte Luftstrom zwischen Lüfterhaube und Lagerflansch, insbesondere in Umfangsrichtung zwischen der Erhebung und einer weiteren Erhebung, heraus und strömt entlang von am Statorgehäuse radial hervorragenden Kühlrippen. Von Vorteil ist dabei, dass eine besonders effiziente Wärmeabgabe ermöglicht ist, da der Wärmeübergangswiderstand verringert ist.

Bei einer vorteilhaften Ausgestaltung weist der Lagerflansch mehrere in Umfangsrichtung voneinander beabstandete radial gerichtete und/oder hervorragende Erhebungen und/oder Fortsätze auf, an denen jeweils ein jeweiliges Halteelement zum Spannverbinden mit einem jeweiligen mit der Lüfterhaube verbundenen Schnellspannverschluss befestigt ist,
wobei der vom Lüfterrad geförderte Luftstrom zwischen Lüfterhaube und Lagerflansch in den in Umfangsrichtung zwischen den Erhebungen liegenden Bereichen herausströmt und entlang von am Statorgehäuse radial hervorragenden Kühlrippen entlangströmt,
insbesondere wobei die Lüfterhaube vom Lagerflansch in dem von den Bereichen in Umfangsrichtung überdeckten Umfangswinkelbereichen beabstandet ist. Von Vorteil ist dabei, dass die Erhebungen der Befestigung des Halteelements für den Schnellspannverschluss dienen und der Entwärmung sowie als Basis zum Aufstülpen der Lüfterhaube auf den Lagerflansch.

Bei einer vorteilhaften Ausgestaltung ist in dem von der Lüfterhaube in axialer Richtung überdeckten Bereich eine elektromagnetisch betätigbare Bremse angeordnet. Von Vorteil ist dabei, dass die Bremse mit dem Kühlluftstrom, der vom Lüfterrad gefördert ist, umströmbar ist und somit ein Teil des von der Bremse erzeugten Verlustwärmestroms innerhalb der Lüfterhaube im Luftstrom aufnehmbar ist und ein anderer Teil beim umströmen der Erhebungen.

Bei einer vorteilhaften Ausgestaltung ist der jeweilige Schnellspannverschluss an der Lüfterhaube befestigt. Von Vorteil ist dabei, dass die Lüfterhaube schnell und einfach befestigbar ist, so dass eine effiziente Entwärmung ermöglicht ist.

Bei einer vorteilhaften Ausgestaltung weist der jeweilige Schnellspannverschluss ein Tragteil auf, das mit der Lüfterhaube verbunden, insbesondere schraubverbunden, ist und ein Schnellspannhebel mittels einer ersten Drehachse drehbar gelagert ist, wobei die erste Drehachse vom Tragteil gehalten ist,
wobei ein Bügel mittels einer am Schnellspannhebel angeordneten zweite Drehachse drehbar relativ zum Schnellspannhebel angeordnet ist,
wobei die erste Drehachse parallel zur zweiten Drehachse ausgerichtet ist und von ihr beabstandet ist. Von Vorteil ist dabei, dass der Schnellspannverschluss einfach herstellbar ist.

Bei einer vorteilhaften Ausgestaltung ist der Bügel im Hakenbereich aufnehmbar und durch Zurückdrehen des Schnellspannhebels zum Hakenbereich verspannbar. Von Vorteil ist dabei, dass eine schnelle Erzeugung der Spannverbindung erreichbar ist.

Bei einer vorteilhaften Ausgestaltung liegt das Halteelement, insbesondere der Hakenbereich, an einem Rand der Lüfterhaube an und die Lüfterhaube begrenzt axial. Von Vorteil ist dabei, dass das Halteelement nicht nur den Bügel hält sondern auch die Lüfterhaube axial begrenzt.

Bei einer vorteilhaften Ausgestaltung ist die Lüfterhaube auf die Erhebung und/oder den Fortsatz oder auf die Erhebungen und/oder Fortsätze aufgesteckt und/oder aufgestülpt. Von Vorteil ist dabei, dass eine einfache Herstellung erreichbar ist und die Lüfterhaube die Erhebungen radial umfasst, insbesondere also radial weiter ausgedehnt ist als die radiale Erstreckung der Erhebungen.

Bei einer vorteilhaften Ausgestaltung ist der auf die Drehachse der Rotorwelle bezogene größte Radialabstand von der oder den Erhebungen und/oder Fortsätzen größer als der auf die Drehachse der Rotorwelle bezogene größte Radialabstand der Kühlrippen des Statorgehäuses. Von Vorteil ist dabei, dass die Erhebungen die Kühlrippen radial überragen und somit der Luftstrom zwischen der Lüfterhaube und dem Lagerflansch sowie in Umfangsrichtung zwischen den Erhebungen austritt und entlang der Kühlrippen strömt.

Bei einer vorteilhaften Ausgestaltung ist ein Bremsflächenteil der Bremse mit dem Lagerflansch verbunden oder einstückig, insbesondere einteilig, ausgeführt. Von Vorteil ist dabei, dass die Wärme ohne Wärmeübergang vom Bremsflächenteil in den Lagerflansch einströmt.

Bei einer vorteilhaften Ausgestaltung ist ein Bremsbelagträger auf einen auf die Rotorwelle aufgesteckten, mit der Rotorwelle drehfest verbundenen, ringförmigen, eine Außenverzahnung aufweisenden Mitnehmer aufgesteckt und drehfest aber axial verschiebbar verbunden,
insbesondere wobei eine Innenverzahnung des Bremsbelagträgers mit der Außenverzahnung im Eingriff ist. Von Vorteil ist dabei, dass eine drehfeste aber axial verschiebbare Verbindung, also eine drehfeste Verbindung, bei welcher sich die verbundenen Teile in axialer Richtung relativ zueinander verschieben können, in einfacher und kostengünstiger Weise erreichbar ist.

Bei einer vorteilhaften Ausgestaltung ist ein Magnetkörper mit dem Bremsflächenteil und/oder dem Lagerflansch drehfest aber axial verschiebbar verbunden,
wobei im Magnetkörper eine bestrombare Spule aufgenommen ist,
wobei axial zwischen Spule und Bremsbelagträger eine ferromagnetische Ankerscheibe angeordnet ist, die drehfest aber axial verschiebbar zum Magnetkörper angeordnet ist,
die von am Magnetkörper abgestützten Federelementen mit einer zum Bremsbelagträger hin gerichteten Federkraft beaufschlagt ist. Von Vorteil ist dabei, dass eine einfache Herstellung ermöglicht ist.

Bei einer vorteilhaften Ausgestaltung wird bei bestromter Spule die Ankerscheibe entgegen der von den Federelementen erzeugten Federkraft zum Magnetkörper hingezogen und bei unbestromter Spule wird die Ankerscheibe von den Federelementen auf den Bremsbelagträger gedrückt, der somit auf eine am Bremsflächenteil ausgebildete Bremsfläche gedrückt wird. Von Vorteil ist dabei, dass bei Stromausfall die Bremse automatisch einfällt.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

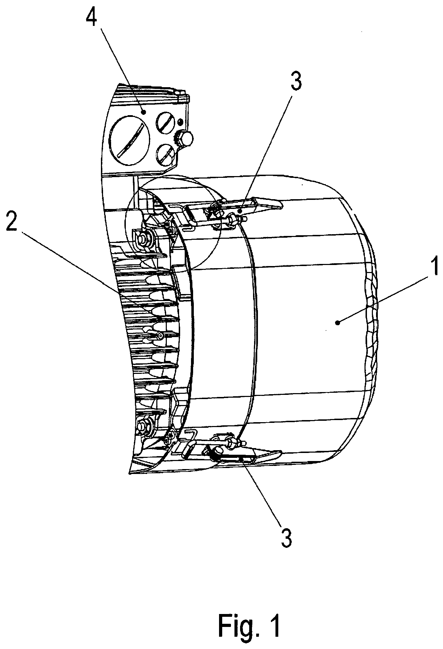

In der Figur 1 ist der B-seitige Bereich eines Elektromotors mit einer mittels eines Schnellspannverschlusses mit einem Lagerflansch 20 des Elektromotors verbundenen Lüfterhaube 1 in Schrägansicht dargestellt.

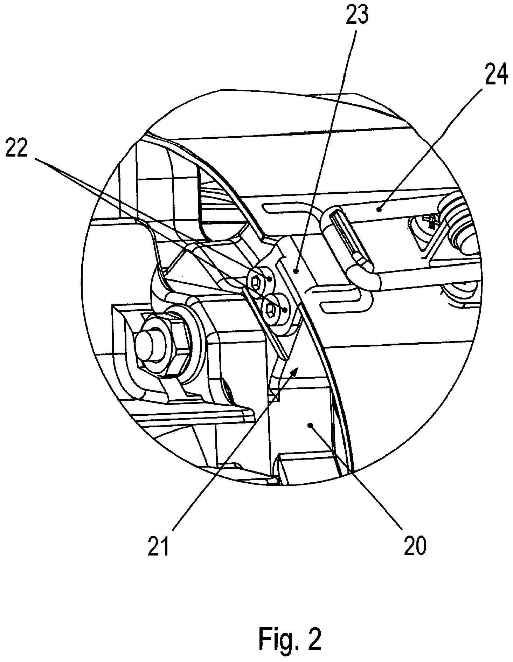

In der Figur 2 ist ein Ausschnitt auf Figur 1 vergrößert dargestellt.

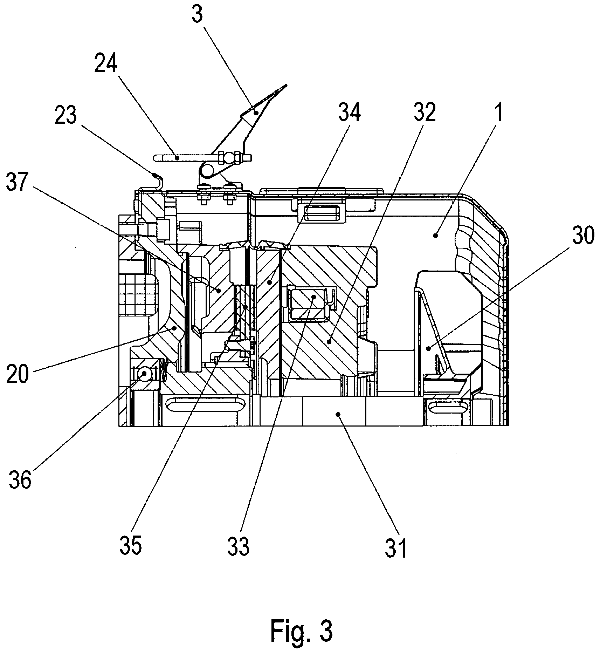

In der Figur 3 ist ein Längsschnitt durch den Bereich des Elektromotors bei geöffnetem Schnellspannverschluss dargestellt.

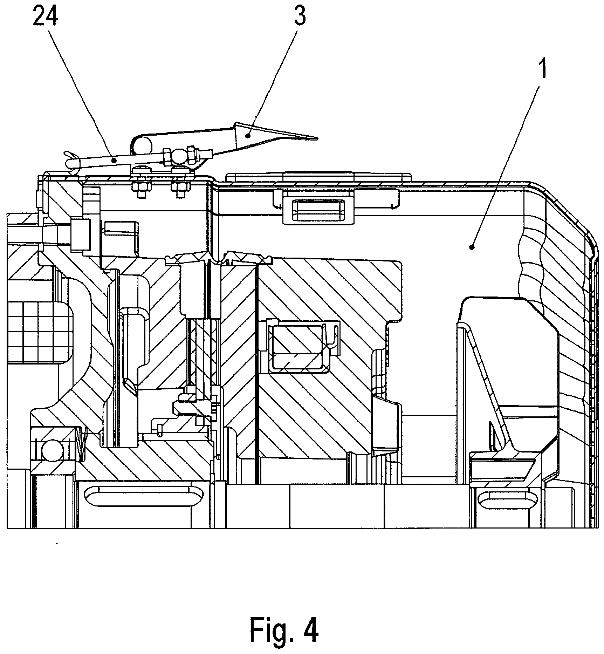

In der Figur 4 ist der Längsschnitt bei geschlossenem Schnellspannverschluss dargestellt.

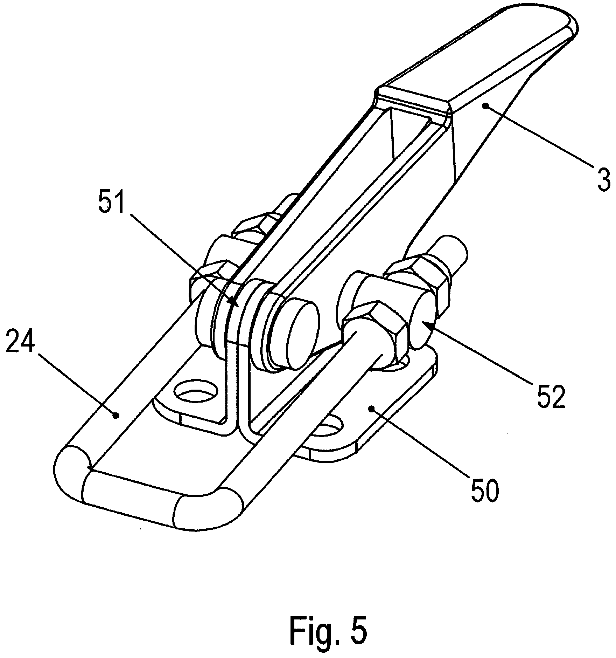

In der Figur 5 ist der Schnellspannverschluss in Schrägansicht dargestellt.

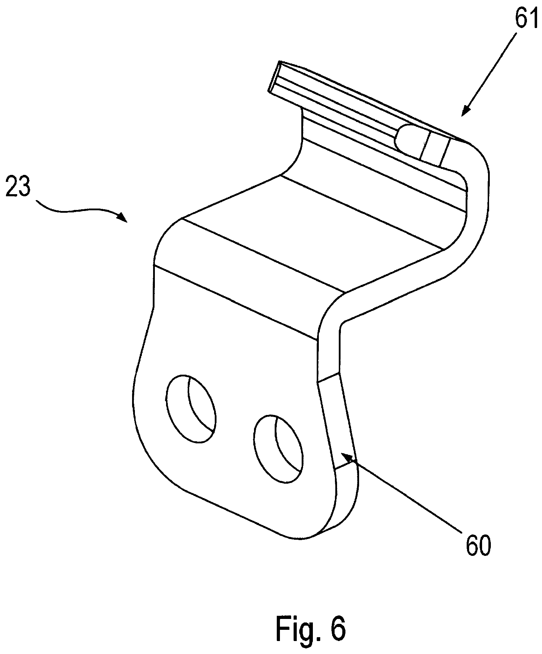

In der Figur 6 ist eine Befestigungslasche 60 des Schnellspannverschlusses in Schrägansicht dargestellt.

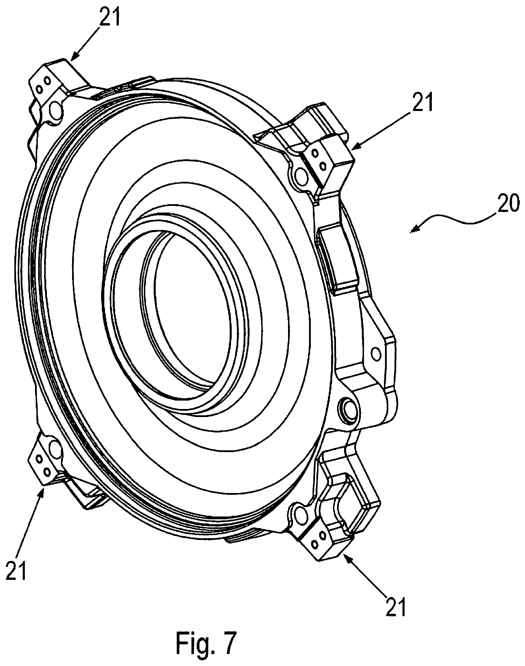

In der Figur 7 ist der Lagerflansch 20 des Elektromotors in Schrägansicht dargestellt.

Wie in den Figuren gezeigt, weist der erfindungsgemäße Elektromotor eine Rotorwelle 31 auf, die über ein in einem Lagerflansch 20 aufgenommenes Lager 36 drehbar gelagert ist.

Der Lagerflansch 20 ist mit einem Statorgehäuse 2 des Elektromotors verbunden, wobei an der Außenseite des Statorgehäuses 2 sich axial erstreckende Kühlrippen angeformt sind.

Die axiale Richtung ist dabei parallel zur Richtung der Drehachse der Rotorwelle 31 ausgerichtet.

Der Lagerflansch 20 weist an seinem radialen Außenumfang radiale Erhebungen und/oder Fortsätze 21 auf, die in Umfangsrichtung voneinander beabstandet sind. Diese Erhebungen und/oder Fortsätze 21 sind also als radial gerichtete Erhebungen ausgeformt und weisen den maximalen Außendurchmesser des Lagerflansches 20 auf. In Umfangsrichtung zwischen den Fortsätzen 21 weist der Lagerflansch 20 kleinere maximale Außendurchmesser auf.

Die Lüfterhaube 1 des Elektromotors ist mit ihrem dem Motor zugewandten axialen Endbereich über den von den Erhebungen und/oder Fortsätzen 21 überdeckten axialen Bereich aufgeschoben und übergestülpt. Somit weist die Lüfterhaube 1 in dem von den Erhebungen und/oder Fortsätzen 21 in axialer Richtung überdeckten Bereich einen größeren Radialabstand zur Drehachse der Rotorwelle 31 auf als die Erhebungen und/oder Fortsätze 21.

Durch die so gebildeten Freiräume zwischen Lagerflansch 20 und Lüfterhaube 1 strömt von einem mit der Rotorwelle 31 drehfest verbundenem Lüfterrad 30 geförderte Luft heraus und an den Kühlrippen des Statorgehäuses 2 entlang.

An jedem der Erhebungen und/oder Fortsätze 21 ist die Lüfterhaube 1 mittels eines jeweiligen Schnellspannverschlusses mit einem jeweiligen Halteelement 23 verbunden, das an einem jeweiligen Fortsatz 21 mittels Schrauben 22 befestigt ist. Hierzu sind die Schrauben 22 axial gerichtet und in entsprechend axial gerichtete Gewindebohrungen des Lagerflansches 20, insbesondere der jeweiligen Erhebungen und/oder Fortsätze 21, eingeschraubt. Dabei sind die Gewindebohrungen in einen axialen Stirnflächenbereich des Fortsatzes 21 eingebracht. Die Schraubenköpfe der Schrauben drücken eine Befestigungslasche 60 des Haltelements 23 an den Stirnflächenbereich an.

Das jeweilige Halteelement 23 weist jeweils einen radial über den Hakenbereich 61 auf, in welchen jeweils ein Bügel 24 des jeweiligen Schnellspannverschlusses eingeklemmt wird.

Hierzu ist an der Lüfterhaube1 ein 50 Tragteil 50 schraubverbunden, gegenüber welchem ein Schnellspannhebel 3 mittels einer am Tragteil 50 gehaltenen erste Drehachse 51 drehbar gelagert ist. Der Bügel 24 ist über eine am Schnellspannhebel 3 gehaltenen zweiten Drehachse 52 drehbar gegenüber dem Schnellspannhebel 3 angeordnet. Die erste Drehachse 51 ist parallel zur zweiten Drehachse 52 ausgerichtet und von ihr beabstandet. Somit ist durch Schwenken des Schnellspannhebels 3 der Bügel 24 einlegbar in den Hakenbereich 61 und durch Zurückschwenken des Schnellspannhebels einspannbar.

Auf diese Weise ist die Lüfterhaube 1 auf den Lagerflansch 20 aufstülpbar und schnell und sicher spannverbindbar. Beim Spannverbinden wird die Lüfterhaube 1 zum Statorgehäuse 2 hingedrückt, bis das Haltelement 23 am Rand der Lüfterhaube 1 anliegt und axial begrenzt ist. Dabei liegt das Haltelement 23 an einem Rand einer axial gerichteten Rücknahme udn7oder Vertiefung der Lüfterhaube 1 an.

Die Lüfterhaube 1 umgibt das Lüfterrad 30 gehäusebildend und weist an ihrer vom Statorgehäuse 2 abgewandten Seite ein Lüftergitter auf, durch welches der vom Lüfterrad 30 angesaugte Luftstrom einströmt.

Axial zwischen dem Lüfterrad 30 und dem Lagerflansch 20 ist eine elektromagnetisch betätigbare Bremse angeordnet und von der Lüfterhaube 1 gehäusebildend umgeben.

Die Rotorwelle 31 ist über das im lagerflansch 20 aufgenommene Lager 36 drehbar gelagert. Ein Bremsflächenteil 37 der Bremse ist mit dem lagerflansch 20 fest verbunden. Ein eine Außenverzahnung aufweisender Mitnehmer ist mit der Rotorwelle 31 drehfest verbunden. Ein Bremsbelagträger 35 weist eine Innenverzahnung auf und ist auf den Mitnehmer aufgesteckt vorgesehen. Die Innenverzahnung ist im Eingriff mit der Außenverzahnung, so dass der Bremsbelagträger 35 zwar drehfest mit dem Mitnehmer verbunden aber axial verschiebbar auf dem Mitnehmer angeordnet ist.

Der Bremsbelagträger 35 weist axial beidseitig je einen Bremsbelag auf.

Ein Magnetkörper 32 ist mit dem Bremsflächenteil 37 und dem Lagerflansch 20 fest verbunden. In einer insbesondere ringförmigen Vertiefung ist eine bestrombare Spule aufgenommen. Die Ringachse der ringförmigen Vertiefung ist dabei parallel zur axialen Richtung ausgerichtet.

Eine zwischen dem Magnetkörper 32 und dem Bremsbelagträger 35 angeordnete Ankerscheibe 34 ist drehfest mit dem Magnetkörper 35 verbunden und in axialer Richtung bewegbar angeordnet. Hierzu sind vorzugsweise durch Ausnehmungen der Ankerscheibe 34 durchgehende Bolzen vorgesehen, die mit dem Magnetkörper verbunden sind.

Bei Bestromung der Spule wird die Ankerscheibe 34 entgegen der von am Magnetkörper 32 abgestützten Federelementen erzeugten Federkraft zum Magnetkörper 32 hingezogen. Bei unbestromter Spule drücken die Federelemente die Ankerscheibe 34 zum Bremsbelagträger 35 hin, der somit auf eine am Bremsflächenteil 37 ausgebildete, insbesondere fein bearbeitete, Bremsfläche gedrückt wird.

Der Luftstrom wird vom Lüfterrad an der Bremse vorbeigefördert und tritt zwischen Lüfterhaube 1 und Lagerflansch 20, insbesondere in Umfangsrichtung zwischen den Fortsätzen 21, derart gerichtet aus, dass er entlang der Kühlrippen des Statorgehäuses 2 entlangströmt. Somit wird nicht nur die Bremse, sondern auch der Motor gekühlt. Insgesamt wird also die Reibwärme der Bremse und die Verlustwärme des Motors über den Luftstrom zumindest teilweise abgeführt.

Da die Erhebungen und/oder Fortsätze 21 von dem Kühlluftstrom umspült sind, ist eine besonders gute Abfuhr von Wärme aus der Bremse ermöglicht. Denn die an der Bremsfläche entstehende Wärme fließt vom Bremsflächenteil 37 über den das Bremsflächenteil 37 berührenden Lagerflansch 20 und dessen Erhebungen und/oder Fortsätze 21 an den Kühlluftstrom ab.

Bei weiteren erfindungsgemäßen Ausführungsbeispielen wird das Bremsflächenteil 37 mit dem Lagerflansch 20 einstückig, also einteilig, ausgebildet.

### Bezugszeichenliste

1 Lüfterhaube
2 Statorgehäuse
3 Schnellspannhebel
4 Anschlusskasten
20 Lagerflansch
21 radialer Fortsatz
22 Schrauben
23 Halteelement
24 Bügel
30 Lüfterrad
31 Rotorwelle
32 Magnetkörper
33 Spule
34 Ankerscheibe
35 Bremsbelagträger
36 Lager
37 Bremsflächenteil
50 Tragteil
51 erste Drehachse
52 zweite Drehachse
60 Befestigungslasche
61 Hakenbereich

## Patentansprüche

1. Elektromotor mit einer Rotorwelle (31), einem Statorgehäuse (2) und einem Lagerflansch (20),
wobei die Rotorwelle (31) über ein im Lagerflansch (20) aufgenommenes Lager (36) drehbar gelagert ist,
wobei ein Lüfterrad (30) mit der Rotorwelle (31) drehfest verbunden ist,
wobei der Lagerflansch (20) mit dem Statorgehäuse (2) verbunden ist mittels Befestigungsmitteln, insbesondere **mittels** Schraubteilen, verbunden ist,
**dadurch gekennzeichnet, dass**
eine das Lüfterrad (30) umgebende Lüfterhaube (1) mittels zumindest einem Schnellspannverschluss mit dem Lagerflansch (20) verbunden ist, indem an der vom Lüfterrad (30) abgewandten Seite des Lagerflansches (20) ein Halteelement (23) mit dem Lagerflansch (20) verbunden ist,
insbesondere mittels axial gerichteter Schrauben (22) an einen Stirnflächenbereich des Lagerflansches (20) angedrückt ist, und ein Bügel (24) des Schnellspannverschlusses in einem Hakenbereich (61) des Halteelements (23) eingelegt und/oder eingespannt ist.

2. Elektromotor nach Anspruch 1,
**dadurch gekennzeichnet, dass**
der Lagerflansch (20) zumindest eine radial gerichtete Erhebung und/oder einen radial gerichteten Fortsatz (21) aufweist,
insbesondere woran der Stirnflächenbereich ausgebildet ist, insbesondere an welchem eine Befestigungslasche (60) des Halteelements (23) anliegt.

3. Elektromotor nach einem der vorangegangenen Ansprüche,
**dadurch gekennzeichnet, dass**
der vom Lüfterrad (30) geförderte Luftstrom zwischen Lüfterhaube (1) und Lagerflansch (20), insbesondere in Umfangsrichtung zwischen der Erhebung und einer weiteren Erhebung, herausströmt und entlang von am Statorgehäuse (2) radial hervorragenden Kühlrippen entlangströmt.

4. Elektromotor nach einem der vorangegangenen Ansprüche,
**dadurch gekennzeichnet, dass**
der Lagerflansch (20) mehrere in Umfangsrichtung voneinander beabstandete radial gerichtete und7doer hervorragende Erhebungen und/oder Forts ätze aufweist, an denen jeweils ein jeweiliges Halteelement (23) zum Spannverbinden mit einem jeweiligen mit der Lüfterhaube (1) verbundenen Schnellspannverschluss befestigt ist,
wobei der vom Lüfterrad (30) geförderte Luftstrom zwischen Lüfterhaube (1) und Lagerflansch (20) in den in Umfangsrichtung zwischen den Erhebungen liegenden Bereichen herausströmt und entlang von am Statorgehäuse (2) radial hervorragenden Kühlrippen entlangströmt,
insbesondere wobei die Lüfterhaube (1) vom Lagerflansch (20) in dem von den Bereichen in Umfangsrichtung überdeckten Umfangswinkelbereichen beabstandet ist.

5. Elektromotor nach einem der vorangegangenen Ansprüche,
**dadurch gekennzeichnet, dass**
in dem von der Lüfterhaube (1) in axialer Richtung überdeckten Bereich eine elektromagnetisch betätigbare Bremse angeordnet ist.

6. Elektromotor nach einem der vorangegangenen Ansprüche,
**dadurch gekennzeichnet, dass**
der jeweilige Schnellspannverschluss and er Lüfterhaube (1) befestigt ist.

7. Elektromotor nach einem der vorangegangenen Ansprüche,
**dadurch gekennzeichnet, dass**
der jeweilige Schnellspannverschluss ein Tragteil (50) aufweist, dass mit der Lüfterhaube (1) verbunden, insbesondere schraubverbunden, ist und ein Schnellspannhebel (3) mittels einer ersten Drehachse (51) drehbar gelagert ist, wobei die erste Drehachse (51) vom Tragteil (50) gehalten ist,
wobei ein Bügel (24) mittels einer am Schnellspannhebel (3) angeordneten zweite Drehachse (52) drehbar relativ zum Schnellspannhebel (3) angeordnet ist,
wobei die erste Drehachse (51) parallel zur zweiten Drehachse (52) ausgerichtet ist und von ihr beabstandet ist.

8. Elektromotor nach einem der vorangegangenen Ansprüche,
**dadurch gekennzeichnet, dass**
der Bügel (24) im Hakenbereich (61) aufnehmbar ist und durch Zurückdrehen des Schnellspannhebels (3) zum Hakenbereich (61) verspannbar ist.

9. Elektromotor nach einem der vorangegangenen Ansprüche,
**dadurch gekennzeichnet, dass**
das Halteelement (23), insbesondere der Hakenbereich (61), an einem Rand der Lüfterhaube (1) anliegt und die Lüfterhaube (1) axial begrenzt.

10. Elektromotor nach einem der vorangegangenen Ansprüche,
**dadurch gekennzeichnet, dass**
die Lüfterhaube (1) auf die Erhebung und/oder den Fortsatz (21) oder auf die Erhebungen und/oder Fortsätze aufgesteckt und/oder aufgestülpt ist.

11. Elektromotor nach einem der vorangegangenen Ansprüche,
**dadurch gekennzeichnet, dass**
der auf die Drehachse (51) der Rotorwelle (31) bezogene größte Radialabstand von der oder den Erhebungen und/oder Fortsätzen größer als der auf die Drehachse (51) der Rotorwelle (31) bezogene größte Radialabstand der Kühlrippen des Statorgehäuses (2) ist.

12. Elektromotor nach einem der vorangegangenen Ansprüche,
**dadurch gekennzeichnet, dass**
ein Bremsflächenteil (37) der Bremse mit dem Lagerflansch (20) verbunden oder einstückig, insbesondere einteilig, ausgeführt ist.

13. Elektromotor nach einem der vorangegangenen Ansprüche,
**dadurch gekennzeichnet, dass**
ein Bremsbelagträger (35) auf einen auf die Rotorwelle (31) aufgesteckten, mit der Rotorwelle (31) drehfest verbundenen, ringförmigen, eine Außenverzahnung aufweisenden Mitnehmer aufgesteckt und drehfest aber axial verschiebbar verbunden ist,
insbesondere wobei eine Innenverzahnung des Bremsbelagträgers (35) mit der Außenverzahnung im Eingriff ist.

14. Elektromotor nach einem der vorangegangenen Ansprüche,
**dadurch gekennzeichnet, dass**
ein Magnetkörper (32) mit dem Bremsflächenteil (37) und/oder dem Lagerflansch (20) drehfest aber axial verschiebbar verbunden ist,
wobei im Magnetkörper (32) eine bestrombare Spule (33) aufgenommen ist,
wobei axial zwischen Spule (33) und Bremsbelagträger (35) eine ferromagnetische Ankerscheibe (34) angeordnet ist, die drehfest aber axial verschiebbar zum Magnetkörper (32) angeordnet ist,
die von am Magnetkörper (32) abgestützten Federelementen mit einer zum Bremsbelagträger (35) hin gerichteten Federkraft beaufschlagt ist.

15. Elektromotor nach einem der vorangegangenen Ansprüche,
**dadurch gekennzeichnet, dass**
bei bestromter Spule (33) die Ankerscheibe (34) entgegen der von den Federelementen erzeugten Federkraft zum Magnetkörper (32) hingezogen wird und bei unbestromter Spule (33) die Ankerscheibe (34) von den Federelementen auf den Bremsbelagträger (35) gedrückt wird, der somit auf eine am Bremsflächenteil ausgebildete Bremsfläche gedrückt wird.

## Claims

1. An electric motor with a rotor shaft (31), a stator housing (2) and a bearing flange (20),
wherein the rotor shaft (31) is rotatably mounted by way of a bearing (36) received in the bearing flange (20),
wherein a fan impeller (30) is connected non-rotatably to the rotor shaft (31),
wherein the bearing flange (20) is connected to the stator housing (2) by means of fastening means, in particular is connected by means of screwing parts,
**characterised in that**
a fan cowl (1) surrounding the fan impeller (30) is connected to the bearing flange (20) by means of at least one quick-release closure, **in that** a holding element (23) is connected to the bearing flange (20) on that side of the bearing flange (20) which faces away from the fan impeller (30),
in particular is pressed by means of axially directed screws (22) against an end-face region of the bearing flange (20), and a bow part (24) of the quick-release closure is placed and/or clamped in a hook region (61) of the holding element (23).

2. An electric motor according to claim 1,
**characterised in that**
the bearing flange (20) has at least one radially directed elevation and/or one radially directed extension (21),
in particular on which the end-face region is formed, in particular against which a fastening tab (60) of the holding element (23) lies.

3. An electric motor according to one of the preceding claims,
**characterised in that**
the air stream conveyed by the fan impeller (30) flows out between the fan cowl (1) and bearing flange (20), in particular in the peripheral direction between the elevation and a further elevation, and flows along cooling fins radially protruding from the stator housing (2).

4. An electric motor according to one of the preceding claims,
**characterised in that**
the bearing flange (20) has a plurality of radially directed und7doer protruding elevations and/or extensions spaced apart from each other in the peripheral direction, to which in each case is fastened a respective holding element (23) for connection by clamping to a respective quick-release closure connected to the fan cowl (1),
with the air stream conveyed by the fan impeller (30) flowing out between the fan cowl (1) and bearing flange (20) in the regions lying between the elevations in the peripheral direction and flowing along cooling fins radially protruding from the stator housing (2),
in particular with the fan cowl (1) being spaced apart from the bearing flange (20) in the angle-at-circumference regions covered in the peripheral direction by the regions.

5. An electric motor according to one of the preceding claims,
**characterised in that**
an electromagnetically actuated brake is arranged in the region covered in the axial direction by the fan cowl (1).

6. An electric motor according to one of the preceding claims,
**characterised in that**
the respective quick-release closure is fastened to the fan cowl (1).

7. An electric motor according to one of the preceding claims,
**characterised in that**
the respective quick-release closure has a supporting part (50) that is connected, in particular screw-connected, to the fan cowl (1), and a quick-release lever (3) is rotatably mounted by means of a first rotation spindle (51), with the first rotation spindle (51) being held by the supporting part (50),
with a bow part (24) being arranged rotatably relative to the quick-release lever (3) by means of a second rotation spindle (52) arranged on the quick-release lever (3),
with the first rotation spindle (51) being oriented parallel to the second rotation spindle (52) and being spaced apart therefrom.

8. An electric motor according to one of the preceding claims,
**characterised in that**
the bow part (24) can be received in the hook region (61) and can be braced in relation to the hook region (61) by turning back the quick-release lever (3).

9. An electric motor according to one of the preceding claims,
**characterised in that**
the holding element (23), in particular the hook region (61), lies against an edge of the fan cowl (1) and axially limits the fan cowl (1).

10. An electric motor according to one of the preceding claims,
**characterised in that**
the fan cowl (1) is mounted and/or fitted on the elevation and/or the extension (21) or on the elevations and/or extensions.

11. An electric motor according to one of the preceding claims,
**characterised in that**
the greatest radial distance, relative to the rotation spindle (51) of the rotor shaft (31), from the elevation or elevations and/or extensions is greater than the greatest radial distance, relative to the rotation spindle (51) of the rotor shaft (31), of the cooling fins of the stator housing (2).

12. An electric motor according to one of the preceding claims,
**characterised in that**
a braking surface part (37) of the brake is connected to the bearing flange (20) or embodied in one piece, in particular in one part, therewith.

13. An electric motor according to one of the preceding claims,
**characterised in that**
a brake lining carrier (35) is mounted on an annular driving element which has external gearing and is mounted on the rotor shaft (31) and connected non-rotatably to the rotor shaft (31), and is connected non-rotatably but axially displaceably,
in particular with internal gearing of the brake lining carrier (35) meshing with the external gearing.

14. An electric motor according to one of the preceding claims,
**characterised in that**
a magnet body (32) is connected non-rotatably but axially displaceably to the braking surface part (37) and/or the bearing flange (20),
with an energisable coil (33) being received in the magnet body (32),
with a ferromagnetic armature disc (34) being arranged axially between the coil (33) and brake lining carrier (35), which armature disc is arranged non-rotatably but axially displaceably in relation to the magnet body (32),
which armature disc is acted upon with a spring force directed towards the brake lining carrier (35) by the spring elements supported on the magnet body (32).

15. An electric motor according to one of the preceding claims,
**characterised in that**
when the coil (33) is energised the armature disc (34) is drawn towards the magnet body (32) counter to the spring force generated by the spring elements, and when the coil (33) is not energised the armature disc (34) is pressed by the spring elements onto the brake lining carrier (35), which is thus pressed onto a braking surface formed on the braking surface part.

## Revendications

1. Moteur électrique avec un arbre de rotor (31), un carter de stator (2) et une bride de palier (20), où l'arbre de rotor (31) est monté rotatif via un palier (36) pouvant être logé dans la bride de palier (20),
où une roue de ventilateur (30) est reliée de manière solidaire en rotation avec l'arbre de rotor (31), où la bride de palier (20) est reliée au carter de stator (2) au moyen de moyens de fixation, en particulier au moyen de pièces de vis,
**caractérisé en ce que**
un capot de ventilateur (1) entourant la roue de ventilateur (30) est relié à la bride de palier (20) au moyen d'au moins un dispositif de verrouillage rapide, **en ce que** sur le côté de la bride de palier (20) opposé à la roue de ventilateur (30), un élément de maintien (23) est relié à la bride de palier (20), en particulier au moyen de vis axiales (22) pressées contre une zone de face frontale de la bride de palier (20), et un étrier (24) du dispositif de verrouillage rapide est inséré et/ou serré dans une zone de crochet (61) de l'élément de maintien (23).

2. Moteur électrique selon la revendication 1, **caractérisé en ce que** la bride de palier (20) présente au moins une saillie orientée radialement et/ou un appendice (21) orienté radialement,
en particulier sur lequel la zone de face frontale est formée, en particulier sur lequel une patte de fixation (60) de l'élément de maintien (23) est appliquée.

3. Moteur électrique selon l'une des revendications précédentes, **caractérisé en ce que** le flux d'air généré par la roue de ventilateur (30) s'écoule entre le capot de ventilateur (1) et la bride de palier (20), en particulier dans la direction périphérique entre la saillie et une autre saillie, et s'écoule le long de nervures de refroidissement dépassant radialement du carter de stator (2).

4. Moteur électrique selon l'une des revendications précédentes,
**caractérisé en ce que**
la bride de palier (20) présente plusieurs saillies et/ou appendices orientés radialement et/ou dépassant radialement, espacés les uns des autres en direction périphérique, sur lesquels respectivement un élément de maintien (23) respectif est fixé pour une connexion de serrage avec un dispositif de verrouillage rapide respectif relié à la capot de ventilateur (1),
où le flux d'air généré par la roue de ventilateur (30) s'écoule entre le capot de ventilateur (1) et la bride de palier (20) dans les zones situées en direction périphérique entre les saillies et s'écoule le long de nervures de refroidissement dépassant radialement du carter de stator (2),
en particulier où le capot de ventilateur (1) est espacé de la bride de palier (20) dans les zones d'angle périphérique recouvertes par les zones en direction périphérique.

5. Moteur électrique selon l'une des revendications précédentes, **caractérisé en ce que** dans la zone recouverte en direction axiale par le capot de ventilateur (1), un frein actionnable électromagnétiquement est disposé.

6. Moteur électrique selon l'une des revendications précédentes, **caractérisé en ce que** le dispositif de verrouillage rapide respectif et le capot de ventilateur (1) sont fixés.

7. Moteur électrique selon l'une des revendications précédentes, **caractérisé en ce que** le dispositif de verrouillage rapide respectif présente une partie porteuse (50), qui est reliée au capot de ventilateur (1), en particulier reliée par vis, et un levier de verrouillage rapide (3) est monté rotatif au moyen d'un premier axe de rotation (51), où le premier axe de rotation (51) est maintenu par la partie porteuse (50),
où un étrier (24) est monté rotatif au moyen d'un deuxième axe de rotation (52) disposé sur le levier de verrouillage rapide (3), relativement au levier de verrouillage rapide (3), où le premier axe de rotation (51) est orienté parallèlement au deuxième axe de rotation (52) et en est espacé.

8. Moteur électrique selon l'une des revendications précédentes, 25 **caractérisé en ce que** l'étrier (24) peut être logé dans la zone de crochet (61) et peut être serré par rotation inverse du levier de verrouillage rapide (3) vers la zone de crochet (61).

9. Moteur électrique selon l'une des revendications précédentes, **caractérisé en ce que** l'élément de maintien (23), en particulier la zone de crochet (61), est appliqué sur un bord du capot de ventilateur (1) et limite axialement le capot de ventilateur (1).

10. Moteur électrique selon l'une des revendications précédentes, **caractérisé en ce que** le capot de ventilateur (1) est emmanché et/ou emboîté sur la saillie et/ou l'appendice (21) ou sur les saillies et/ou appendices.

11. Moteur électrique selon l'une des revendications précédentes, **caractérisé en ce que** la plus grande distance radiale, relative à l'axe de rotation (51) de l'arbre de rotor (31), de la ou des saillies et/ou appendices est supérieure à la plus grande distance radiale, relative à l'axe de rotation (51) de l'arbre de rotor (31), des nervures de refroidissement du carter de stator (2).

12. Moteur électrique selon l'une des revendications précédentes, **caractérisé en ce qu'**une partie de surface de frein (37) du frein est reliée à la bride de palier (20) ou réalisée d'une seule pièce, en particulier d'une seule partie.

13. Moteur électrique selon l'une des revendications précédentes, **caractérisé en ce qu'**un support de garniture de frein (35) est emmanché sur un entraînement annulaire, emmanché sur l'arbre de rotor (31), relié de manière solidaire en rotation avec l'arbre de rotor (31), présentant une denture extérieure, et est emmanché et relié de manière solidaire en rotation mais déplaçable axialement, en particulier où une denture intérieure du support de garniture de frein (35) est en prise avec la denture extérieure.

14. Moteur électrique selon l'une des revendications précédentes, **caractérisé en ce qu'**un corps magnétique (32) est relié de manière solidaire en rotation mais déplaçable axialement avec la partie de surface de frein (37) et/ou la bride de palier (20),
où une bobine (33) apte à être alimentée en courant est logée dans le corps magnétique (32),
où axialement entre la bobine (33) et le support de garniture de frein (35) est disposé un disque d'ancrage ferromagnétique (34), qui est disposé de manière solidaire en rotation mais déplaçable axialement par rapport au corps magnétique (32),
qui est soumis à une force de ressort dirigée vers le support de garniture de frein (35) par des éléments de ressort soutenus sur le corps magnétique (32).

15. Moteur électrique selon l'une des revendications précédentes, **caractérisé en ce qu'**avec la bobine (33) alimentée en courant, le disque d'ancrage (34) est attiré vers le corps magnétique (32) contre la force de ressort générée par les éléments de ressort, et avec la bobine (33) non alimentée en courant, le disque d'ancrage (34) est pressé par les éléments de ressort sur le support de garniture de frein (35), qui est ainsi pressé sur une surface de frein formée sur la partie de surface de frein.
